# EUROPEAN PATENT APPLICATION

(11) **EP 3 404 522 A1**
(43) Date of publication of application: **21.11.2018**
(21) Application number: 17171248.2
(22) Date of filing: 16.05.2017
(51) Int. Cl.: G06F 3/0481

(54) **A METHOD FOR VIEWING PANORAMIC CONTENT AND A HEAD MOUNTED DEVICE**

(71) Applicant: Nokia Technologies Oy, 02610 Espoo (FI)
(72) Inventor: AERTS, Maarten, 2018 Antwerp (BE); LIEVENS, Sammy, 2018 Antwerp (BE)
(74) Representative: D'Halleweyn, Nele Veerle Trees Gertrudis

(57) **Abstract**

A method for viewing panoramic content in a head mounted device, said method comprising the steps of: rendering of first panoramic content of a first scene from a first viewpoint, wherein the first scene corresponds with a first field of view; rendering of second panoramic content such that a second scene is displayed from a second viewpoint which is closer to the first scene or further away from the first scene; rendering of third panoramic content such that a third scene is displayed from the second viewpoint, wherein said third scene corresponds with a third field of view which is rotated with respect to the first field of view.

## Description

### Field of Invention

The field of the invention relates to the field of viewing panoramic content. Particular embodiments relate to the field of viewing panoramic content using a head mounted device.

### Background

With the rise of Virtual Reality (VR), more and more content becomes available. However, this content is often in the form of a 360° panoramic video, taken from a single viewpoint. In more advanced embodiments, the content may be recorded from some viewpoints close together to create a stereo 360° panoramic video. However, such mono or stereo panoramic video data does not allow a user to move around in the content. A scene is easily captured in that manner and it is much harder to capture the full 3D geometry of a scene.

In prior art embodiments some kind of external control may be added to a HMD giving the user access to the Field Of View (FOV) of the renderer in the HMD. In other prior embodiments a joystick as can be found on many gamepads, can be used. In a normal modus, the content is shown at exactly the FOV of the headset. Making the FOV bigger creates a feeling of zooming out and narrowing the FOV, gives the feeling of zooming in. The external control, e.g. some kind of slider on a touch pad of the HMD, allows a user to control the FOV parameter and thus the level of zooming. Such embodiments have amongst others the disadvantage that the zooming-in and zooming-out feels like looking through binoculars.

### Summary

The object of embodiments of the invention is to allow VR users to zoom in on specific regions of panoramic content in a more intuitive way.

According to a first aspect of the invention there is provided a method for viewing panoramic content in a head mounted device. The method comprises the steps of:
- rendering of first panoramic content of a first scene from a first viewpoint, wherein the first scene corresponds with a first field of view;
- rendering of second panoramic content such that a second scene is displayed from a second viewpoint which is closer to the first scene or further away from the first scene;
- rendering of third panoramic content such that a third scene is displayed from the second viewpoint, wherein said third scene corresponds with a third field of view which is rotated with respect to the first field of view.

Using embodiments of the invention, when a user desires to look closer at the first scene, the viewpoint, i.e. the virtual camera centre of the head mounted device, is translated in the direction of the viewing sphere, resulting in the viewpoint being translated from the first viewpoint to the second viewpoint which is closer to the first scene, whilst preferably the FOV is kept more or less the same. Similarly, when a user desires to look away from the first scene, the viewpoint, i.e. the virtual camera centre is translated in the direction away from the viewing sphere, whilst preferably the FOV is kept more or less the same. Also the effect of "zooming out" and getting more panoramic content in the viewport of the head mounted device feels very intuitive. When virtually closer to the content sphere (i.e. when a user has indicated a desire to look closer at the first scene, and when then rendering the second panoramic content as described above) and when e.g. a user indicates a desire to look away from the centre of the second scene, the FOV is rotated. Because the FOV value may be kept more or less the same (i.e. the third FOV may be more or less the same as the second and the first FOV), and the second viewpoint is positioned as described above, this does not become a fast translation over the content as if looking through binoculars. Rather, it becomes an intuitive transformation, where both the "zoomed in" property of standing close to the subject is kept, and the global perspective is regained because the third panoramic content may gradually be at lower zooming levels as the rotation becomes bigger.

According to an exemplary embodiment the method comprises:
determining a first movement of the user indicating a desire to look closer or further away from the first scene; wherein the rendering of the second panoramic content is done such that a second scene is displayed from a second viewpoint which is closer to the first scene or further away from the first scene, depending on the determined first movement.

In that manner, the amount of "zooming in" or "zooming out" can be controlled by movements performed by the user, and by keeping the FOV more or less constant a very intuitive viewing can be achieved compared to prior art techniques where the viewpoint is maintained fixed and the FOV is changed when zooming in or zooming out.

Preferably, determining a movement of the user indicating a desire to look closer or further away from the first scene comprises detecting an amount of leaning forward or backward of the user, respectively; and the rendering of the second panoramic content is done such that a second scene is displayed from a second viewpoint which moves gradually closer to the first scene as the detected amount of leaning forward is higher and which moves gradually away from the first scene as the detected amount of leaning backward is higher.

In that manner, when a user desires to look closer at certain elements of the first scene, the user will intuitively lean forward, resulting in a very natural viewing. Further, the amount of leaning forward or backward will result in a gradually changing natural view.

According to an exemplary embodiment the method further comprises the step of:
determining a second movement of the user indicating a desire to look away from the centre of the second scene; and the rendering of third panoramic content such that a third scene is displayed from the second viewpoint, is done such that said third scene corresponds with a third field of view which is rotated with respect to the first field of view depending on the determined second movement.

In such an exemplary embodiment, when virtually closer to the content sphere (i.e. when a user has indicated a desire to look closer at the first scene, and when then rendering the second panoramic content as described above) and when e.g. a user's head is turned to the left or right (indicating a desire to look away from the centre of the second scene), the FOV is rotated. Because the FOV value may be kept more or less the same (i.e. the third FOV may be more or less the same as the second and the first FOV), and the second viewpoint is positioned as described above, this does not become a fast translation over the content as if looking through binoculars. Rather, it becomes an intuitive transformation, where both the "zoomed in" property of standing close to the subject is kept, and the global perspective is regained because the third panoramic content may gradually be at lower zooming levels as you look away. Similarly, when virtually further away of the content sphere and e.g. a user's head is turned to the left or to the right, the rotation of the FOV will not become a fast translation over the content.

Preferably the determining of a second movement of the user indicating a desire to look away from the centre of the second scene comprises detecting a measure for an amount of rotation of the head of the user to the left, to the right, upward or downward; and the rendering of third panoramic content such that a third scene is displayed from the second viewpoint, is done such that said third scene corresponds with a third field of view which is rotated with respect to the first field of view in accordance with the detected measure for the amount of rotation of the head of the user. In that manner, the third panoramic content is changed gradually as the amount of rotation increases, resulting in a gradually changing natural view.

Preferably the second field of view has a value which corresponds to the first field of view +/-10%, more preferably +/- 5%, even more preferably +/-1%. Most preferably the second field of view has a value which is equal to the value of the first field of view.

In other words, the field of view (FOV) may be kept more or less constant when "zooming in" (a user indicating a desire to look closer at the first scene) or "zooming out" (a user indicating a desire to look further away from the first scene).

Preferably the third field of view has a value which corresponds to the first field of view +/- 10%, more preferably +/- 5%, even more preferably +/-1%. Most preferably the third field of view has a value which is equal to the value of the second field of view.

According to an exemplary embodiment the determining of a movement of the user indicating a desire to look closer or further away from the first scene comprises:
- sensing a rotation and translation of the head mounted device using one or more sensors in the head mounted device;
- determining a measure representative for the translation of the spine of the user based on the sensed rotation and translation; and wherein the rendering of the second panoramic content comprises setting the second view point in function of the determined measure for the translation of the spine.

According to an exemplary embodiment the second viewpoint is determined to be at a distance of the first viewpoint, said distance being a function of the movement of the user indicating a desire to look closer or further away from the first scene. Preferably this function is gradually increasing from zero corresponding with no movement of the user to a maximum value corresponding to a maximum determined movement of the user, wherein said maximum value is lower than the distance between the first viewpoint and the first scene.

According to an exemplary embodiment the second viewpoint is determined to be located in a circle segment between the first viewpoint and the first scene, when the movement indicates a desire to look closer to the first scene, and in a mirrored circle segment at the other side of the first viewpoint when the movement indicates a desire to look away from the first scene.

According to an exemplary embodiment, when the movement indicates a desire to look closer to the first scene, the rendered second panoramic content has a resolution which is higher than the resolution of the rendered first panoramic content.

According to an exemplary embodiment the first scene is rendered using a triangle mesh composing a sphere or cylinder around the first viewpoint. The first panoramic content is mapped onto the texture of the triangles. The first field of view preferably corresponds with the FOV of the head mounted device. The second viewpoint is then closer to or further away from a part of the sphere or cylinder corresponding with first field of view, than the first viewpoint.

According to another aspect, there is provided a head mounted device for viewing panoramic content, said head mounted device comprising a display; and a renderer. The renderer is configured for rendering on said display first panoramic content of a first scene from a first viewpoint, wherein the first scene corresponds with a first field of view. The renderer is further configured for rendering of second panoramic content such that a second scene is displayed from a second viewpoint which is closer to the first scene or further away from the first scene; and for rendering of third panoramic content such that a third scene is displayed from the second viewpoint, wherein said third scene corresponds with a third field of view which is rotated with respect to the first field of view.

In an exemplary embodiment the head-mounted device further comprises at least one sensor configured for sensing a first movement of the user indicating a desire to look closer at or further away from the first scene, and preferably configured for detecting an amount of leaning forward or backward of the user, respectively. The renderer is configured for rendering of the second panoramic content such that a second scene is displayed from a second viewpoint which is closer to the first scene or further away from the first scene, depending on the determined first movement; and preferably such that the second scene is displayed from a second viewpoint which moves gradually closer to the first scene as the detected amount of leaning forward is higher and which moves gradually away from the first scene as the detected amount of leaning backward is higher.

According to an exemplary embodiment the at least one sensor is further configured for sensing a second movement of the user indicating a desire to look away from the center of the second scene; and the renderer is configured for rendering of third panoramic content such that a third scene is displayed from the second viewpoint, wherein said third scene corresponds with a third field of view which is rotated with respect to the first field of view based on the sensed second movement. Preferably the sensing of a second movement of the user indicating a desire to look away from the centre of the second scene comprises detecting a measure for an amount of rotation of the head of the user to the left, to the right, upward or downward; and the renderer is configured to render the third panoramic content such that the third scene corresponds with a third field of view which is rotated with respect to the first field of view in accordance with the detected measure for the amount of rotation of the head of the user. In that manner, the third panoramic content is changed gradually as the amount of rotation increases, resulting in a gradually changing natural view.

According to an exemplary embodiment the at least one sensor is configured to sense a rotation and translation of the head mounted device. The head mounted device may then further comprise a correction module configured for determining a measure representative for the translation of the spine of the user based on the sensed rotation and translation; and the renderer may then be configured to set the second view point in function of the determined measure for the translation of the spine.

According to an exemplary embodiment the renderer is configured to determine the second viewpoint to be at a distance of the first viewpoint, said distance being a function of the sensed first movement of the user. Preferably this function is gradually increasing from zero corresponding with no movement of the user to a maximum value corresponding to a maximum determined movement of the user, wherein said maximum value is lower than the distance between the first viewpoint and the first scene. According to an exemplary embodiment the renderer is configured to determine the second viewpoint to be located in a circle segment between the first viewpoint and the first scene, when the movement indicates a desire to look closer to the first scene, and in a mirrored circle segment at the other side of the first viewpoint when the movement indicates a desire to look away from the first scene.

According to an exemplary embodiment, the renderer is configured, when the movement indicates a desire to look closer to the first scene, to render the second panoramic content with a resolution which is higher than the resolution of the rendered first panoramic content.

Further preferred features of the head mounted device correspond with features described above for exemplary embodiments of the method.

According to another aspect there is provided a system for capturing and viewing panoramic content. The system comprising a plurality of head mounted devices according to any one of the embodiments described above; and a capturing device configured for capturing the first panoramic content. Preferably, the system further comprises a device, e.g. an upsampler, configured for preparing the second panoramic content based on the first panoramic content and at least one of additional panoramic content and other data, preferably such that said second panoramic content has a higher resolution that said first panoramic content.

According to a further aspect, there is provided a computer program comprising computer-executable instructions to perform the method, when the program is run on a computer, according to any one of the steps of any one of the embodiments disclosed above.

According to another aspect there is provided a head mounted device storing a computer program according to any one of the embodiments defined above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a standard pipeline of a stereo 360° video experience;
Figures 2A, 2B and 2C illustrate schematically the field of view (FOV) of a HMD in a normal view, after a zooming-in step and after a zooming-out step, respectively, before and after a head rotation of 45° to the left;
Figures 3A, 3B and 3C illustrate schematically the field of view (FOV) of a HMD in a normal view, after a zooming-in step and after a zooming-out step, respectively, before and after a head rotation of 45° to the left, according to an exemplary embodiment;
Figure 4 is a graph plotting the virtual camera position in function of the physical translation, illustrating a mapping function with clipping, according to an exemplary embodiment;
Figure 5 is a graph plotting the virtual camera position in function of the physical translation, illustrating a mapping function with gradual limiting to the maximum comfortable resolution, according to an exemplary embodiment;
Figure 6 is a graph similar to the graph of figure 5, wherein the mapping function is adapted such that very small physical translations in a narrow band around the neutral head position are regarded as accidental and not mapped into a virtual translation;
Figure 7 is a block diagram illustrating an exemplary embodiment of a system and method for rendering content in a HMD; and
Figure 8 is a block diagram illustrating another exemplary embodiment of a system and method for rendering content in a HMD.

### Description of embodiments

Virtual Reality (VR) content is often in the form of a 360° panoramic video, taken from a single viewpoint, or recorded from some viewpoints close together to create a stereo 360° panoramic video. A scene is easily captured in that manner. Such mono or stereo panoramic video data is shown only in its given form: a mono or stereo 360° video, seen through a Head Mounted Device (HMD), as if the user was standing exactly at the camera's location in the VR scene. Any other degree of freedom would require different capturing methods and/or many more computations to come up with an enabling representation of the scene.

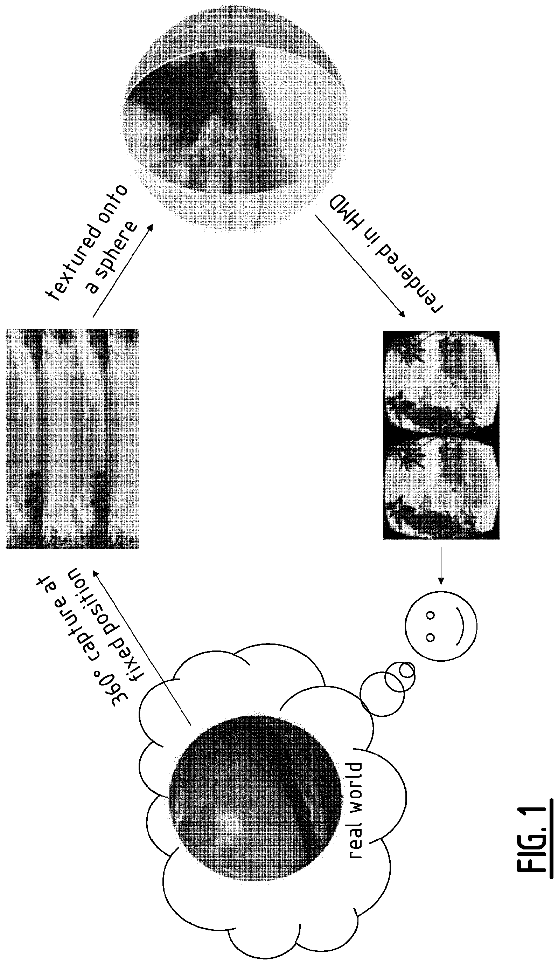

A standard pipeline of a stereo 360° video experience is illustrated in figure 1. Real world is captured form a fixed position, and the resulting panoramic video is rendered onto a virtual sphere. With an HMD the user looks around from the centre of this sphere and sees what was captured from the real world, as if he was exactly there.

In reality, a person moves his head, i.e. a person may rotate and/or translate his head, and both have distinct effects on how we see the world with our eyes. The translational part is lost in the VR experiences as described above. This degrades the immersive experience.

Embodiments of the invention are based on the insight that there may be two reasons why a person moves his head:
1. to get another viewpoint, because the sight is not good due to occlusion or because one is looking at a side or a back;
2. to get closer to the subject.

Because of the limitations of capturing, the first problem cannot easily be overcome. No other viewpoint is available, so occlusions cannot be removed easily, and it is not possible to show an object from a different side. However, the second problem can be tackled by zooming in on the content, given that the content itself is captured at a resolution that enables this.

The object of embodiments of the invention is to allow VR users to zoom in on specific regions of 360° content in an intuitive way. More in particular, it is an object of embodiments of the invention to avoid that head rotation gives a disorienting feeling during zooming-in.

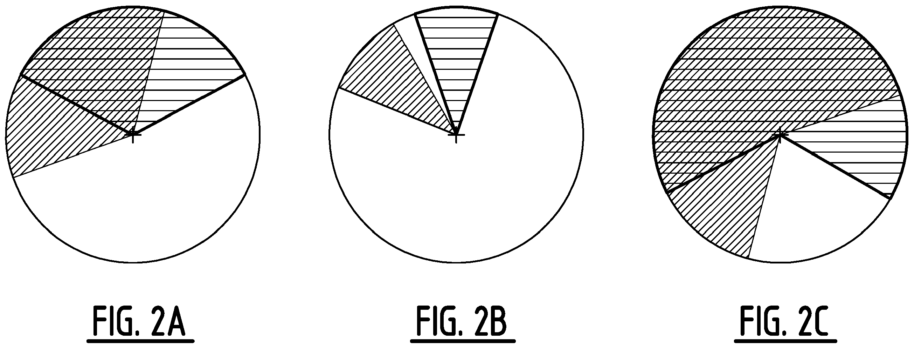

In prior art embodiments some kind of external control is added to a HMD giving the user access to the Field Of View (FOV) of the renderer in the HMD. In other prior embodiments a joystick as can be found on many gamepads, can be used. In a normal view, the content is shown at exactly the FOV of the headset, see figure 2A. Making the FOV bigger, see figure 2C, creates a feeling of zooming out and narrowing it, see figure 2B, gives the feeling of zooming in. The external control, e.g. some kind of slider on a touch pad of the HMD, allows a user to control the FOV parameter and thus the level of zooming. Such embodiments have several disadvantages. First, an extra manual control is needed. Second, the zooming-in and zooming-out feels like looking through binoculars. When trying to find something using binoculars, any small rotation of the head would no longer feel like rotation, but more like an exaggerated translation. Since a user is missing the global picture, it's easy to get disoriented, after which you have to zoom out, get your orientation back, refocus and zoom in again on the target. It could be envisaged to decrease the effects of head rotation, proportional to the zooming factor, but this would not make the viewing feel more intuitive. A third minor disadvantage is that if you zoom in by changing the FOV, but without adapting the disparities between left and right view, your eyes will find it difficult to adapt to the new depth planes, as if you're looking to it with your nose on the screen. This may be corrected by just adding an appropriate constant disparity in function of the zooming level.

One way to solve this is to reconstruct a 3D scene from the captured content. However, this requires capturing with appropriate capture devices enabling such reconstruction, i.e. multiple, stereo or depth-sensing cameras. Occlusions must be handled by complex in-painting methods, based on appropriate models for the given content. Such solutions are often not available or not computationally feasible.

Embodiments of the invention solve at least one and preferably all three disadvantages of the existing FOV solution and meanwhile also answer the question of how a VR application as described above can be responsive to head motion as well, without really changing the actual viewpoint.

First it will be explained how panoramic content may be rendered on an HMD. Legacy rendering pipelines used to render all sorts of 3D content are good at expressing a 3D world as a composition of triangles with textures and projecting those triangles onto a virtual camera. By far the most common used is the OpenGL rendering pipeline. GPU's are specifically optimized for this kind of computations and OpenGL is optimized for use with the GPU. Therefore, in preferred embodiments this simple rendering paradigm for rendering 360 video may be used.

The scene exists of a static triangle mesh composing a sphere or cylinder around the centre of the virtual camera, see the right hand side of figure 1. The panoramic video is mapped onto the texture of the triangles. The virtual camera rotates, in the same manner as the HMD, but stays at the centre of the sphere or the cylinder. The FOV of the virtual camera is set to the FOV of the HMD. The rendering pipeline will automatically discard any parts of the sphere outside of the current viewport. The radius of the cylinder or sphere has no effect on the actual projection onto the virtual camera. Also, the triangle mesh may have various shapes. Preferably the shape is topologically equivalent to a sphere. However, one may also envisage using a triangle mesh composing a cube. However, spheres or cylinders are typically preferred as they ease up the computations for the texture mapping. If the panoramic video is stereo, this process is repeated for the other eye, applying the texture corresponding to the other eye's viewpoint.

In exemplary embodiments of the invention this standard rendering pipeline may be used. Embodiments of the invention are based at least partly on the inventive insight that it is desirable for a user to be able to zoom in on a region of interest, and, when he wants to shift his region of interest, to be able to maintain a global perspective of the scene, so as not to get disoriented or not to have to turn to the binocular solution of zooming out, refocusing and zooming back in. More in particular, the inventors realised that a solution can be achieved which is more intuitive, by exploiting the capabilities of the rendering pipeline in an improved manner, by not constraining virtual camera motion, as will be explained below.

In exemplary embodiments of the invention subtle head translation from the user is mapped to translations of the virtual camera of the rendering pipeline. These mappings may be exaggerated in the sense that a small head translation may be translated in a much bigger translation of the virtual camera. For instance, content is recorded outdoors and objects are at about 10 m from the camera. Subtle head motion is in the orders of 10 cm, i.e. about 1/100 of the dimensions of the scene. When this content is rendered on a virtual sphere with radius 1, we will not map a physical head movement of 10 cm to a virtual camera translation of 0.01, but rather in the order of 0.1. Note that virtual measurements are scale-less. You might say that this exaggeration of head motion by a factor of 10, equivalently corresponds to shrinking the scene by a factor of 10. That is also how it feels: as if you are suddenly a giant in the virtual space, or the virtual space became a tiny miniature world.

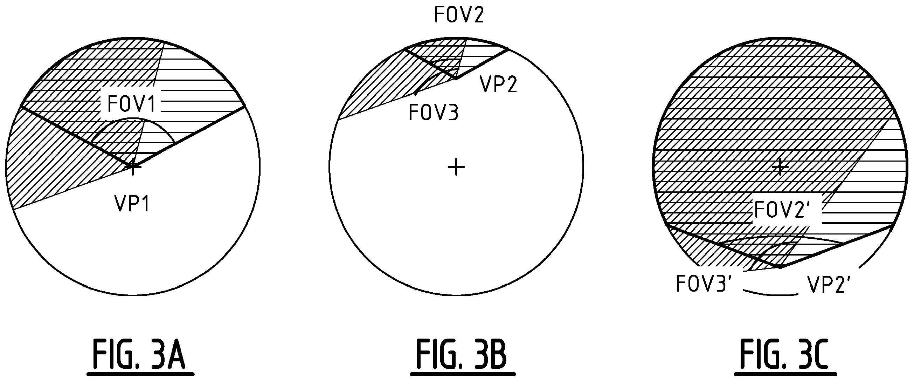

In embodiments of the invention the FOV may be kept constant when zooming in or zooming out. This is illustrated in figures 3A, 3B and 3C. In figure 3A the normal viewing is shown where first panoramic content corresponding with a first scene and a field of view FOV1 is rendered. Figure 3B shows a zooming-in step where second panoramic content is rendered: the virtual camera centre has been translated in the current viewing direction from the first viewpoint FP1 to the second viewpoint FP2, whilst the FOV is kept the same, i.e. FOV1 = FOV2. Similarly, figure 3C shows a zooming-out step where second panoramic content is rendered: the virtual camera centre has been translated in the direction opposite to the current viewing direction, from the first viewpoint FP1 to the second viewpoint FP2', whilst the FOV is kept the same, i.e. FOV1 = FOV2'. Further, when virtually closer to the content sphere (see the hatched cone in figure 3B) and a user's head is turned to the left, the field of view is rotated from FOV2 to FOV3 whilst the value thereof is kept the same, i.e. FOV3 = FOV2. The rotation does not become a fast translation over the content as if looking through binoculars, see the grey cone in figure 3B. Indeed, in figure 3B the overlap the two hatched circle segments overlap whilst in the example of figure 2B the two hatched circle segments do not overlap, causing the disoriented feeling. Rather, the rotation of figure 3B becomes an intuitive transformation, where both the zoomed in property of standing close to the subject is kept, and the global perspective is regained because the content in the new centre of the viewing cone will gradually be at lower zooming levels as you turn your head. Indeed, if one is close to the viewing sphere and the user's head is turned to the left, the sphere is viewed from a slanted angle, see the grey cone in figure 3B. A user is still zoomed in on objects nearby, seen on the right side of the viewport and gradually zooming out on objects in the direction of the left side of the viewport. The amount of zooming can be controlled by moving closer with your head and the balance between zoomed in content and overall perspective can be controlled by the rotation of your head in the direction you want to gain perspective. Similarly, when virtually further away of the content sphere (see the hatched cone in figure 3C) and a user's head is turned to the left, the field of view is rotated from FOV2' to FOV3' whilst the value thereof is kept the same, i.e. FOV3' = FOV2'. The rotation does not become a fast translation over the content, see the grey cone in figure 3C. Also the effect of zooming out and getting almost all of the 360 content in the viewport of the HMD feels very intuitive. Head rotation does not get 'slowed down' as would be the effect when adapting FOV accordingly.

It is noted that even though such a process feels intuitive, distortions of the content may be noticeable, because the true captured scene is most likely not spherical in nature. However, in many cases, the spherical nature fits more or less topologically with the actual scene. Experiments have shown that these distortions are not too disturbing and the freedom of now being able to zoom freely through the content is of much greater value.

The zooming-in and zooming-out steps explained above in connection with figures 3A, 3B and 3C, also apply when the triangle mesh has a different shape, e.g. cylindrical. For a cylindrical shape the distortions are different. Cylindrical projection gives less bending of straight lines when you move away from the centre of the mesh. Spheres have the advantage of filling top and bottom, which may be desirable for some content. In general, it is preferred to choose a shape that is related to the original scene. An aligned cube might for instance be used when visualizing 360 video of a building or any other Manhattan-like scene.

In exemplary embodiments of the invention the mapping may be different from a linear scaling from physical head translation to virtual camera translation, as will be discussed in more detail below. First it is noted that in the context of the present application mapping was referred to as if it relates to one dimensional mapping. In reality the translation vector resides in 3D. However, any 3D coordinate in a spherical form can be written with its centre at the neutral head position for the physical space or at the centre of the triangle mesh for the virtual camera space. The mapping is than in fact only on the radial dimension, while azimuth and elevation are kept. If we render on a cylinder, we transform analogously in cylindrical coordinates. For other shapes, such simple 1D mapping may not be possible.

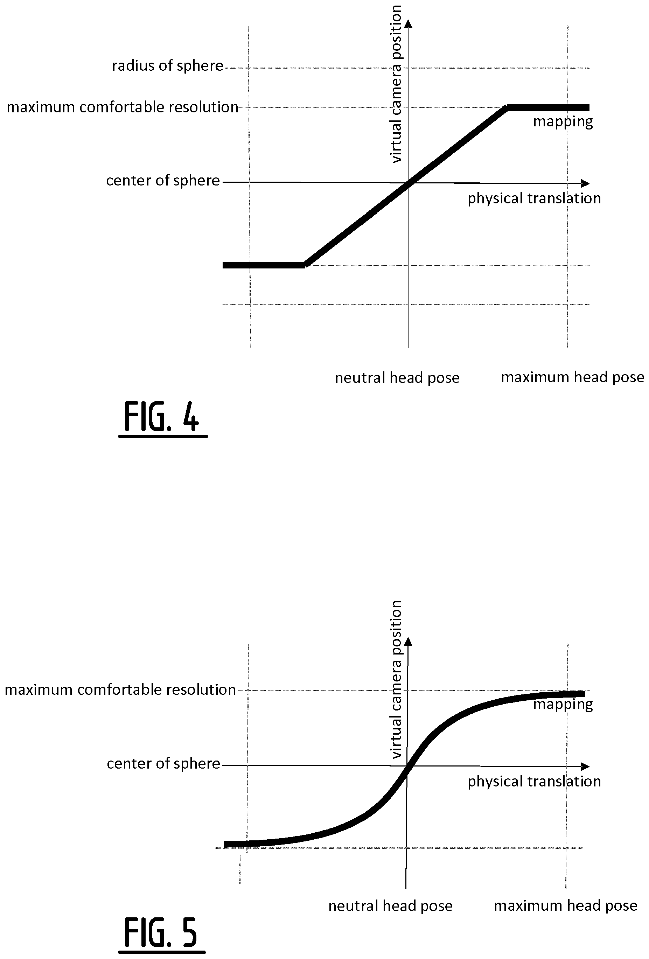

The graphs of figures 4, 5, 6 show the radial component of the virtual camera position (Y-axis) versus the physical translation (X-axis) for exemplary embodiments. The physical boundaries of head translation for a person sitting in a chair or standing at one place may be estimated and the translation of the virtual camera position is preferably such that the mapping never exits the sphere. For example, the virtual camera position may be clipped at a distance close to the sphere. Also the resolution of the content may not be suitable for very close or zoomed in rendering, so preferably the position of the virtual camera will be clipped at a distance well before exiting the sphere, see the "maximum comfortable resolution" mentioned in figures 4, 5 and 6.

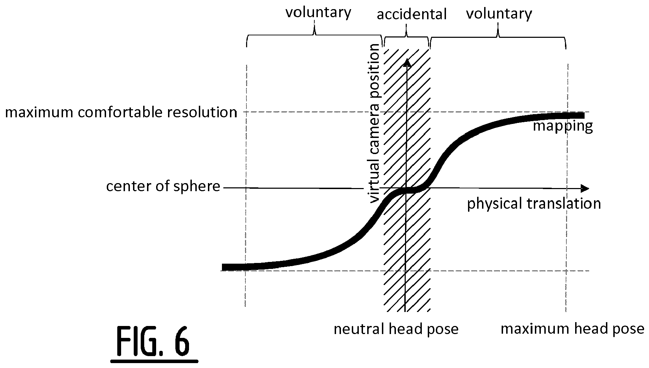

Also, as you get closer to the scene, it may be advantageous to slow down the scaling factor. This gives a more intuitive feel of reaching the maximum zoom factor than clipping it abruptly. Such an embodiment is illustrated in figure 5 and 6. Indeed, when you come back from a point beyond the maximum resolution, with abrupt clipping as in figure 4, a user would first have the feeling that nothing is happening at the flat part of the mapping, and would then suddenly get a response when entering the linear part. A gradual change as in figures 5 and 6 makes this transition smoother and hence more intuitive.

Further, a user may accidently get closer to the content. Preferably, only intentional motion is taken into account. Thus, small head motion near the centre neutral position of the head is preferably regarded as noise and discarded. Preferably, only significant head motion (although this may still be a subtle gesture) amounts to the translation of the virtual camera. This may be an abrupt clipping behaviour, but as in the previous remark, it is preferred to make it gradual in order to have smooth response rather than an abrupt behaviour, see figure 6.

In exemplary embodiment of the invention any physical translation may be used for the mapping. Although e.g. the translation of a user's head may be used, in preferred embodiments the translation of a user's spline is used. When a user is looking around, not voluntarily translating his head, the HMD physically rotates around a moving centre point (more or less around the spine). So any physical rotation of the head around this centre point will be picked up as a rotation plus a translation by suitable sensor's located in the HMD. The mapping may take this into account, meaning that it is not only a function of the translation of the head, but also of the rotation of the head. In practice, this boils down to estimating the translation of the user's spine rather than the translation of the HMD. In alternative embodiments, there may be provided a sensor in the neck, such that the translation of the spine can be measured directly. In embodiments where the sensor(s) is located in the HMD, when rendering, a bit of rotational-dependent translation may be added to the virtual camera, but typically to a lesser extent, so that we still have the normal 360 experience without zooming in the neutral position. This adding of rotational-dependent translation is done for the following reasons. In the physical world, when a person rotates his head, his eyes experience a combined translation plus rotation (similar to what is explained for the HMD). It is a small translation, but it is noticeably, especially when standing in a small scene. The rotation is not around an axis through the eye, and a person feels this.

In preferred embodiments, on the one hand it is desirable to cancel out the effect that the HMD is sensing translation, when you actually only intend to rotate your head, but on the other hand also a bit of this false-translation back is added, because your used to it in physical world. The two corrections do not compensate, because the mapping of head translation physically is not 1-to-1 with the translation virtually. Typically, there is a big scaling up, or exaggeration of the subtle head motion to the virtual motion. Because the corrections do not compensate, first the unwanted translation may be cancelled, and next a bit of translation is reinstalled to the extent that would reflect the user's expectance when turning his head in the real world. That extent is exactly reflected in the slope of the curves in figure 4, 5 and 6.

It is noted that by this transformation, no special measures have to be taken to maintain correct disparities over the varying depth range. When moving closer to objects in the content, the disparities get magnified as well and the stereo vision will also tell you that these objects are indeed at a closer range. When looking at the sphere at a slanted angle, some objects will be magnified and pulled closer, some will be zoomed out and put at a more distant plane.

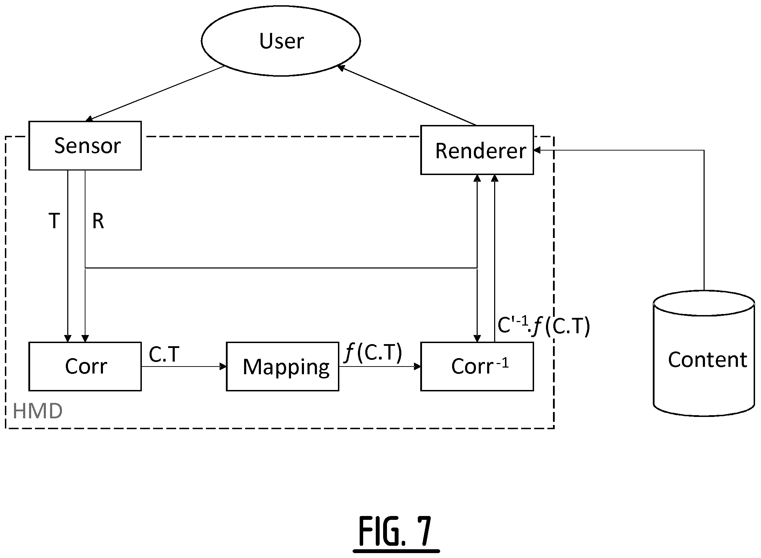

Figure 7 illustrates an exemplary embodiment with a HMD comprising at least one sensor configured for measuring a translation and rotation of the HMD, e.g. a gyroscope and/or an accelerometer. The HMD's translation T and rotation R are read from the at least one sensor. A classical prior art panoramic video approach would discard T and directly put R to the renderer. According to the embodiment of figure 7 the translation vector T is put through a first correction stage, where R is used to estimate the location of the spine with respect to the HMD. If T is a 4-wide homogenous vector representing the 3D translation, you can write this correction as a linear matrix-vector product T'=C.T, where the 4x4 matrix C is a function of R. This corrected translation vector T' is then put through a non-linear mapping stage, defined by a function f (T') = f(C.T), as described before in connection with figures 4, 5 and 6. Then an inverse correction is applied to get from the spine's mapped translation to the translation of the virtual camera. This mapping is again a matrix-vector product, where C' is again a function of rotation R, but may differ slightly from C, because the distance between the sensor of the HMD and the spine is not necessarily equal to the distance between the centre of the virtual camera and the mapped translation point, as explained earlier. This results in a translation vector T" = C'⁻¹^.f(C.T). The original rotation vector R together with the mapped and corrected translation vector T" are then fed to the renderer to calculate the appropriate projection matrices of the virtual camera.

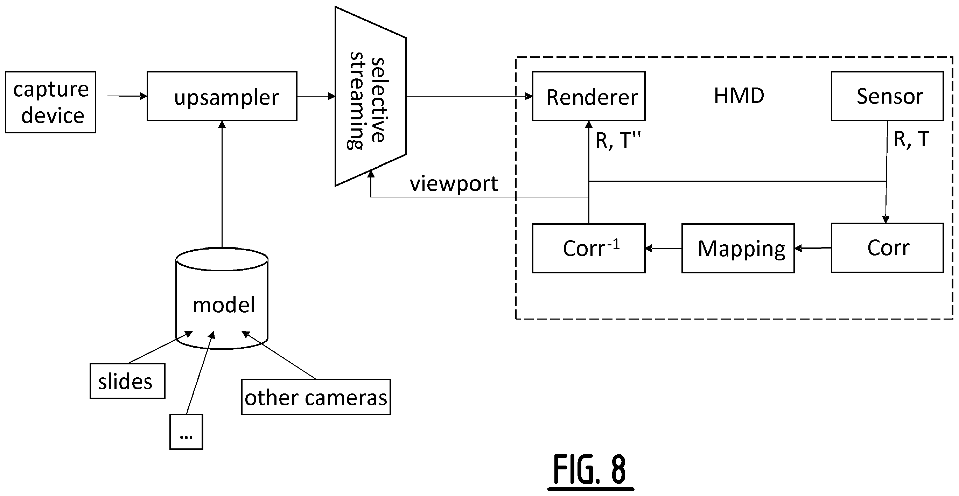

Figure 8 illustrates a further exemplary embodiment. In this embodiment a live VR streaming application is envisaged where a 360 stereo capturing device, like the Nokia OZO, is placed in a conference room. It is assumed that during the meeting, a presenter is talking, showing slides and interacting with other people in the room. At a remote location, another person can experience this meeting as if he is there in the room, at the location of the capturing device. The capturing device may e.g. have a resolution of 4K pixels. With such a resolution, when smeared out over a 360° sphere, and when displayed with a FOV as big as 100°, typically one cannot afford to zoom in on any content. On the other hand, some text and figures on the presented slides may be unreadable at that resolution. Since they are a key feature of the meeting, it is desirable to come up with a way of zooming in on the slides.

Preferably, the feed is up-sampled, e.g. based on some model of the captured scene. There are several options. An OCR technique may be performed on the low-resolution text and it may be up-scaled it to 16K or more, such that the text can be better readable. Existing techniques are proven to outperform human capabilities at reading text at low resolutions. The model is then composed of images of text at low resolutions and their corresponding ground truth text. A second option is to ask the presenter to upload the slides to the system and embed them directly into the rest of the captured content. This requires solving a simple well-constrained problem of finding the planar homography between the slide at high resolution and the projected slide in the video feed. Even occlusions can be detected and visualized accordingly, or even better: removed.

A remote participant joins the meeting by putting on his VR headset. His starting position is registered as the neutral head position. At any moment in time, he can indicate a new neutral position, by pressing a button on the headset. During the meeting, he can look around, watch the speaker as well as other attendants in the room, all from the neutral position, which corresponds to the exact location of the capturing device. He can see the slides, but when he wants to read them, he notices that the resolution is insufficient. He can now lean in on the slides, as he would do when something too small to read appears on a screen or on a paper. In that case, you pull it (or yourself) closer too. When he leans in, this head translation is registered by the VR headset and mapped into a translation closer to the slides in the virtual world. Because we are not showing what is actually captured, but a version of the slides, that was up-scaled with the use of the uploaded original, he can now read the slides at a more comfortable resolution. When the speaker jumps to another figure on the slide, the remote participant can simply look around and quickly move to the new interest region on the slide. He does not need to return to a more zoomed out position in order to know where to zoom back in. He can even quickly turn to see the reaction on the face of another participant, when the speaker makes a joke.

Streaming 4K content is still feasible, but when the content is up-scaled to 16K or more, it may be considered to stream it all. However, the high resolution is only desirable when the VR device is zoomed in on a particular region. In the unzoomed situation, the standard 4K is sufficient. Therefore, preferably, the full panoramic at high resolution is not streamed all the time, but only what is needed by the HMD. According to this embodiment the streaming side will be informed about which viewport of the whole sphere is visible to the user and the streaming side, see the selective streaming block in figure 8, will only stream that part. Note that as a consequence it can happen that some parts have to be streamed at low resolutions and some at high-resolutions at the same time. More details about the selective streaming can be found in European patent application EP17158163.0 in the name of the applicant, which is included herein by reference.

Also, in preferred embodiments, the receiver side (i.e. the HMD) will request a slightly bigger viewport than the exact FOV of the renderer. Because of network delay, the round-trip time of such a request can take up to several frames. In that manner the unpredictable nature of the user's head movement can be foreseen and all possible trajectories in that short timespan can be covered.

In a further exemplary embodiment an application is envisaged where a soccer match can be enjoyed from a virtual place in the stadium, but in the comfortable surroundings of a living room. The capturing device is now placed somewhere in the stadium, so that will be the viewpoint. Sometimes a user wants to sit closer to the action to see the details of the game by some players. In a normal broadcast it is the director who decides when to cut to which camera to toggle between an overview of the field of a close-up of the action. When you are physically at the stadium, you do not even have the option; you get the overview all the time. By the use of an exemplary embodiment as described in figure 8, the user can now decide where to look and how close to look. He will simply do so by leaning in on the specific region of interest.

Especially in large-field sports games like soccer, the dynamic range of the game is huge. One moment a player is intercepting a ball of his opponent - something you want to see in close-up, the next moment he kicks the ball 50m to the other side of the field. As a viewer you do not want to miss a thing, so you need fast changes between close-ups and overview shots. That is where exemplary embodiments as described in figure 8 are very useful. When the user wants a close-up of a player, he leans in on him. When that player kicks the ball, the user can maintain a close-up of that player, while gaining perspective of the whole filed, by turning sideways from that position. This has a clear advantage over trying to follow the ball by looking through binoculars, or simply having to return to overview.

Also, the physical head motion is a very intuitive interface for zooming, especially in this case. No user will take the time to zoom in and out using an external manual control during 2 hours of a soccer game. But leaning in comes naturally; a user probably already does that unconsciously, when watching a game on a regular TV.

Further, as soccer games are captured with many cameras, some for overview, others for close-up, the capturing device feed can be superresolved up to a factor of 4, by using known dictionary based superresolution techniques. Typically, a full 3D reconstruction of the game is not done, as it would require far more computational resources, so the close-up feeds are not fully registered to the capturing device feed. However a dictionary of hi-res patches can be built from the close-up feed. The superesolution technique then looks for the best matching patches in the dictionary to be used to upscale the resolution of the capturing device feed. Some techniques even propose to build an offline dictionary using other hi-res images, or images within the same class of soccer games, but from other instances. The general rule is that the better the dictionary is related to the low-res input feed, the better quality the high-res superresolved output. In this embodiment the upsample block of figure 8 denotes the superresolution technique, and the model denotes the dictionary.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "devices" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A method for viewing panoramic content in a head mounted device, said method comprising the steps of:
rendering of first panoramic content of a first scene from a first viewpoint, wherein the first scene corresponds with a first field of view;
rendering of second panoramic content such that a second scene is displayed from a second viewpoint which is closer to the first scene or further away from the first scene;
rendering of third panoramic content such that a third scene is displayed from the second viewpoint, wherein said third scene corresponds with a third field of view which is rotated with respect to the first field of view.

2. The method of claim 1, further comprising:
determining a first movement of the user indicating a desire to look closer or further away from the first scene; wherein the rendering of the second panoramic content is done such that a second scene is displayed from a second viewpoint which is closer to the first scene or further away from the first scene, depending on the determined first movement.

3. The method of claim 2, wherein determining a movement of the user indicating a desire to look closer or further away from the first scene comprises detecting an amount of leaning forward or backward of the user, respectively; and wherein the rendering of the second panoramic content is done such that a second scene is displayed from a second viewpoint which moves gradually closer to the first scene as the detected amount of leaning forward is higher and which moves gradually away from the first scene as the detected amount of leaning backward is higher.

4. The method of any one of the claims 1-3, further comprising:
determining a second movement of the user indicating a desire to look away from the center of the second scene;
wherein the rendering of third panoramic content such that a third scene is displayed from the second viewpoint, is done such that said third scene corresponds with a third field of view which is rotated with respect to the first field of view depending on the determined second movement.

5. The method of claim 4, wherein determining a movement of the user indicating a desire to look away from the center of the second scene comprises detecting a measure for an amount of rotation of the head of the user to the left, to the right, upward or downward; and wherein the rendering of third panoramic content such that a third scene is displayed from the second viewpoint, is done such that said third scene corresponds with a third field of view which is rotated with respect to the first field of view in accordance with the detected measure for the amount of rotation of the head of the user.

6. The method of any one of the previous claims, wherein the second field of view has a value which corresponds to the first field of view +/- 10%, preferably +/- 5%, more preferably +/-1%, most preferably a value which is equal to the value of the first field of view; and/or wherein the third field of view has a value which corresponds to the first field of view +/- 10%, preferably +/- 5%, more preferably +/-1%, most preferably a value which is equal to the value of the second field of view.

7. The method of any one of the claims 2-3, wherein the determining of a first movement of the user indicating a desire to look closer or further away from the first scene comprises:
sensing a rotation and translation of the head mounted device using one or more sensors in the head mounted device;
determining a measure representative for the translation of the spine of the user based on the sensed rotation and translation; and wherein the rendering of the second panoramic content comprises setting the second view point in function of the determined measure for the translation of the spine.

8. The method of any one of the claims 2, 3, 8, wherein the second viewpoint is determined to be at a distance of the first viewpoint, said distance being a function of the movement of the user indicating a desire to look closer or further away from the first scene, wherein said function is gradually increasing from zero corresponding with no movement of the user to a maximum value corresponding to a maximum determined movement of the user, wherein said maximum value is lower than the distance between the first viewpoint and the first scene.

9. The method of any one of the previous claims, wherein the second viewpoint is determined to be located in a circle segment between the first viewpoint and the first scene, when the movement indicates a desire to look closer to the first scene, and in a mirrored circle segment at the other side of the first viewpoint when the movement indicates a desire to look away from the first scene.

10. The method of any one of the previous claims, wherein, when the movement indicates a desire to look closer to the first scene, the rendered second panoramic content has a resolution which is higher than the resolution of the rendered first panoramic content.

11. A computer program comprising computer-executable instructions to perform the method, when the program is run on a computer, of any one of the previous claims.

12. A head mounted device for viewing panoramic content, said head mounted device comprising:
a display;
a renderer configured for rendering on said display first panoramic content of a first scene from a first viewpoint, wherein the first scene corresponds with a first field of view;
wherein the renderer is further configured for rendering of second panoramic content such that a second scene is displayed from a second viewpoint which is closer to the first scene or further away from the first scene; and for rendering of third panoramic content such that a third scene is displayed from the second viewpoint, wherein said third scene corresponds with a third field of view which is rotated with respect to the first field of view.

13. The head mounted device of claim 12, further comprising at least one sensor configured for sensing a first movement of the user indicating a desire to look closer at or further away from the first scene, and preferably an amount of leaning forward or backward of the user, respectively; wherein the renderer is configured for rendering of the second panoramic content such that a second scene is displayed from a second viewpoint which is closer to the first scene or further away from the first scene, depending on the determined first movement; preferably such that the second scene is displayed from the second viewpoint which moves gradually closer to the first scene as the detected amount of leaning forward is higher and which moves gradually away from the first scene as the detected amount of leaning backward is higher.

14. The head mounted device of claim 12 or 13, wherein the at least one sensor is further configured for sensing a second movement of the user indicating a desire to look away from the center of the second scene; and wherein the renderer is configured for rendering of third panoramic content such that a third scene is displayed from the second viewpoint, wherein said third scene corresponds with a third field of view which is rotated with respect to the first field of view based on the sensed second movement.

15. System for capturing and viewing panoramic content, said system comprising:
a plurality of head mounted devices according to any one of the claims 12-14;
a capturing device configured for capturing the first panoramic content;
a device configured for preparing the second panoramic content based on the first panoramic content and at least one of additional panoramic content and other data, preferably such that said second panoramic content has a higher resolution that said first panoramic content.
